Europäisches Patentamt

European Patent Office

Office européen des brevets

(11) Publication number: **0 059 572**
**B1**

(12) **EUROPEAN PATENT SPECIFICATION**

(45) Date of publication of patent specification: **06.03.85**

(21) Application number: **82300873.5**

(22) Date of filing: **22.02.82**

(51) Int. Cl.⁴: **C 03 B 9/40,** C 03 B 9/193,
C 03 B 9/16

(54) A method of monitoring a glassware forming process.

(30) Priority: **27.02.81 GB 8106179**

(43) Date of publication of application:
**08.09.82 Bulletin 82/36**

(45) Publication of the grant of the patent:
**06.03.85 Bulletin 85/10**

(84) Designated Contracting States:
**BE DE FR GB IT**

(56) References cited:
**FR-A-2 422 603**
**FR-A-2 447 889**
**US-A-3 332 765**

(73) Proprietor: **EMHART INDUSTRIES, INC.**
**426 Colt Highway**
**Farmington Connecticut 06032 (US)**

(72) Inventor: **Jones, Stanley Peter**
**Strafford House Bride Church Lane**
**Tickhill Nr. Doncaster (GB)**

(74) Representative: **Drury, Peter Lawrence et al**
**P.O. Box 88 Ross Walk Belgrave Road**
**Leicester LE4 5BX (GB)**

Courier Press, Leamington Spa, England.

## Description

Technical Field

This invention is concerned with a method of monitoring a cyclic process of forming glassware in an individual section glassware forming machine in which gobs of molten glass are first formed into parisons at a blank station of the machine and articles of glassware are shaped from the parisons at a shaping station of the machine.

The invention is also concerned with an individual section glassware forming machine which comprises a station at which a blank mould for forming parisons is located, and another station at which a blow mould for shaping parisons into articles of glassware is located.

Background Art

A conventional individual section glassware forming machine has two stations; a blank station at which a parison is formed and a shaping station at which the parison is shaped into an article of glassware. However, individual section glassware forming machines have been proposed (see for example U.K. Patent Specification No. 1,491,859) which have three stations, a parison being formed at a first station, the parison being reheated at a second station, and the parison being shaped at a third station.

Individual section glassware forming machines, whether they are of the conventional type or of the proposed type mentioned above, operate in a cyclic process in which the machine performs successive cycles of operations at each of the stations. In a conventional machine, two process cycles are required to form an article of glassware from a gob of molten glass and in the proposed machine mentioned above three process cycles are required. In both types of individual section glassware forming machines, however, a parison is formed at one station, the parison is transferred by a neck ring arrangement to the next succeeding station of the machine, and, after release of the parison at the next succeeding station, the neck ring arrangement immediately returns to the first station for formation of the next parison.

In the interests of productivity, it is desirable to monitor the operation of an individual section glassware forming machine in order to detect as soon as possible any malfunction in the process so as to avoid damage to any parts of the machine and to reduce the down time. Such damage can easily arise in the event of breakage of either the parison or an article of glassware which may, in the latter case, be due to malformation of the parison.

Disclosure of Invention

According to one aspect of the invention a method of monitoring a cyclic process of forming glassware in an individual section glassware forming machine of the type specified in the first paragraph of page 1 is characterised in that infra-red detector means is used to provide a signal corresponding either to the presence or absence of hot glass at a selected position or positions in the machine, the signal provided by the infra-red detector means is examined at a selected time in the cyclic process to ascertain whether the signal corresponds to the expected condition of the infra-red detector means at the selected time, and emergency action is initiated in the event that the signal provided by the infra-red detector means does not correspond to the expected condition thereof.

In order to monitor that all the parisons formed at the blank station of the machine have been removed therefrom, a selected position in the machine may be such that parisons removed from the blank station should be detected by the infra-red detector means at the selected time.

In order to detect whether a parison formed at the blank station is defective in that it is of excessive length, the infra-red detector means may be used to detect whether a parison formed at the blank station of the machine has a length exceeding a predetermined length, and emergency action is initiated in the event that a parison exceeds that length.

In order to monitor whether articles of glassware shaped at the shaping station of the machine are removed therefrom, a selected position in the machine may be such that articles of glassware are removed from the shaping station by take-out means of the machine should be detected by the infra-red detector means at the selected time.

Where the cyclic process of the machine is for making a plurality of articles of glassware simultaneously with a plurality of gobs being formed into parisons at the blank station and the parisons being shaped into articles of glassware at the shaping station, in order to monitor whether all the articles of glassware formed in a single cycle have been removed from the shaping station, the selected position of the infra-red detector means may be such that the articles of glassware will pass the selected position successively, and the signal from the detector means is examined as aforesaid at successive selected times in the cyclic process, the successive selected times corresponding to the times when successive articles of glassware should pass the selected position.

An individual section glassware forming machine of the type specified in the second paragraph of page 1 is, in accordance with the invention, characterised in that the machine comprises monitoring apparatus comprising infra-red detector means operable to provide a signal corresponding either to the presence or absence of hot glass at a selected position in the machine, examining means operable to examine the signal provided by the infra-red detector means at a selected time in the operation of the machine to ascertain whether the signal corresponds to the expected condition of the infra-red detector means, and emergency action means operable to initiate emergency action in the machine in the event that the examining means detects that the signal of the infra-red detector means does not correspond to the expected condition thereof.

So that the parts of the infra-red detector means, the examining means, and the emergency action means of the machine which may be susceptible to excessive heat may not be subjected to such excessive heat, the infra-red detecting means may comprise transmitting means arranged to transmit infra-red radiation emitted by hot glass at the selected position in the machine to infra-red activated switch means of the detecting means located in a position in which it does not receive radiation directly from hot glass in the machine.

In order to prevent dust or dirt from obscuring the infra-red detecting means, air flow means may be provided to cause a cleansing air flow across a viewing face of the infra-red detector means.

The invention thus relies on the detection of infra-red radiation emitted by hot glass to check the presence or absence of hot glass at a selected position in the machine at a selected time in the cyclic process. This form of detection has the advantage that it is passive in that the hot glass does not suffer any reaction as a result of the detection, as would occur for example if the hot glass were sensed by physical contact therewith.

Although the hot glass, from which infra-red radiation is detected in the embodiments of the invention which will be described in detail with reference to the accompanying drawings, is either a parison or an article of glassware, the hot glass could be a gob of molten glass. In this case, the infra-red radiation is sensed, for example, as the gob enters the blank mould at the blank station. The check for the infra-red radiation is initiated under the control of an electronic timer (which may be computer controlled) in order to sense the infra-red radiation at an instant when its presence or absence will give an indication as to whether the machine is working correctly.

Thus, the monitoring of the glassware forming machine may be affected by detecting infra-red radiation emitted by any one or more of a gob of molten glass, a parison, and an article of glassware. The monitoring could be effected by checking that the blank mould receives a gob of molten glass, by checking that the correct number of parisons is transferred from the blank station, or by checking that the correct number of articles of glassware are taken out from the shaping station. Furthermore the monitoring could be effected by checking the presence of the correct number of parisons after they have been transferred from the blank station to the next succeeding station, which in the conventional individual section machine is the blow station. At this stage in the cyclic process, the parisons could be checked for malformation, for example by checking that the length of the parisons either before or after reheating does not exceed a predetermined length or does exceed some other predetermined length. A further alternative method of effecting this monitoring is by checking the presence of the correct number of articles of glassware after they have been transferred from the shaping station to a take-out position such as a dead plate.

A monitoring process and apparatus in accordance with the invention is not limited in its application to the conventional individual section machine, and indeed the invention has particular application in the three-station individual section glassware forming machine mentioned above. In a three-station machine, it is convenient for the monitoring of the hot glass to be effected on parisons supported at the intermediate or reheating second station. This station is located between the blank station and the shaping station.

The emergency action which is initiated in accordance with the invention in response to the detection of an undesired condition (i.e. a lack of correspondence between the expected presence or absence of hot glass at a selected position), may be an interruption of the manufacture of articles of glassware in the machine so as to prevent damage to the machine.

In the event of an undesired condition being detected in a conventional two-station machine, it is desirable to effect emergency action in the form of an emergency stop while simultaneously giving an alarm indication to the operator of the machine, for example by means of a flashing light. In the case of the three-station machine, however, it may not be necessary for the emergency action to consist of an emergency stop of the whole machine, although this could be necessary if it is found that there is some malfunction in both the formation of the parisons and in the articles of glassware transferred from the blow station to a take-out position. However, it is preferred, provided that the undesired condition which is detected so permits, for the formation of parisons at the blank station to continue, even though these parisons are subsequently dropped at the intermediate second station to form cullet which is returned to a glass melting furnace. By continuing the parison-forming operation, the temperature of the blank moulds is maintained near the correct operating temperature so that, once a fault in a later part of the process has been remedied, the production of articles of commercial quality can be recommenced with a minimum delay possible.

From the U.S. Patent Specification No. 3,332,765 a method of controlling the temperature of a glass parison is known, wherein the temperature of the glass is sensed by an infra-red sensitive phototube at a certain moment in the cycle of the machine, which sensed temperature is used for controlling the temperature of the parison mould.

From the French Patent Application No. 2,447,009 it is known to use, in an I.S.-machine, sensors operating in that part of the spectrum that is between visible light and infra-red light, to detect the presence of a mob of glass when this approaches a parison mould, the signal transmitted by the sensor being used to determine the moment at which the cycle of the section concerned has to start.

Brief Description of Drawings

In the accompanying drawings:

Figure 1 is a diagrammatic side view of a machine in accordance with the invention;

Figure 2 is a fragmentary side view, on an enlarged scale, with portions cut away showing details of the machine shown in Figure 1 at an intermediate second station thereof;

Figure 3 is a plan view taken on the line III—III of Figure 2;

Figure 4 is an enlarged view of the optical head shown sectioned in Figure 3; and

Figures 5 and 6 are logic circuit diagrams depicting the monitoring procedures carried out during operation of the machine.

Best Mode of Carrying out the Invention

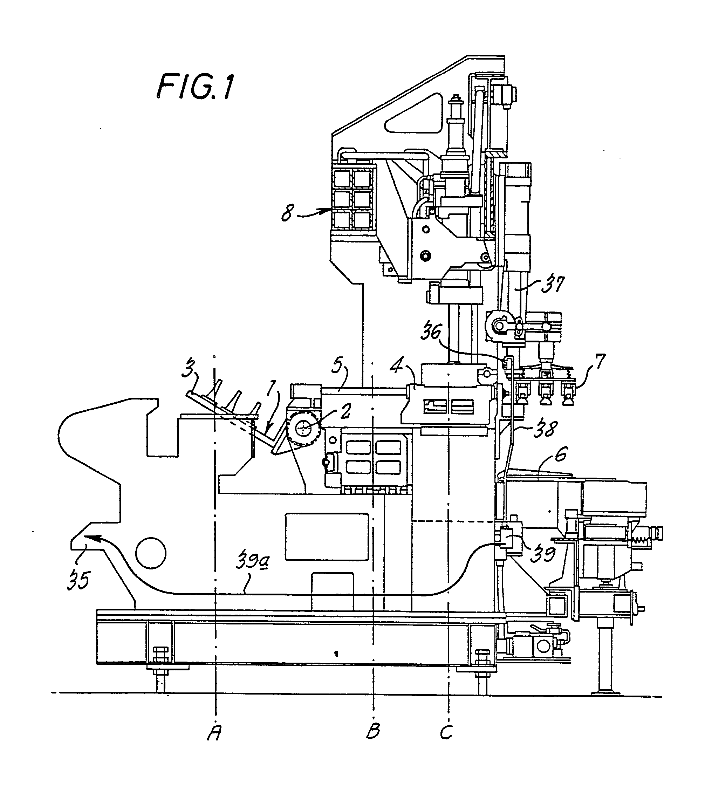

The machine shown in Figure 1 is an individual section glassware forming machine which is arranged to operate in the triple gob mode. The machine has three stations and gobs of molten glass are fed to three blank moulds at a blank station A where the gobs are formed into parisons in an inverted position by pressing or blowing in a conventional manner. A transfer and invert mechanism 1 moves the three parisons formed at the blank station A to an intermediate second station B. The mechanism 1 is rotatable about a transverse horizontal axis 2, a neck ring arm 3 of the mechanism 1 swinging through 180° to transfer the parisons from the blank station A to the station B in a conventional manner. At the intermediate station B, the parisons are received in an upright position by supporting jaws of a transfer carriage 4 which is horizontally movable along spaced guide rails (one of which is shown at 5 in Figure 1) between the intermediate station B and a shaping station C. After release from the support jaws of the transfer carriage 4 at the shaping station C, the parisons are formed into articles of glassware in three blow moulds at the shaping station C, the glassware articles being removed from the shaping station C and transferred to a take-out position, in this case a dead plate 6, by take-out means 7. Figure 1 also shows superstructure 8 which supplies air to the blow moulds at the shaping station C to form the reheated parisons into articles of glassware.

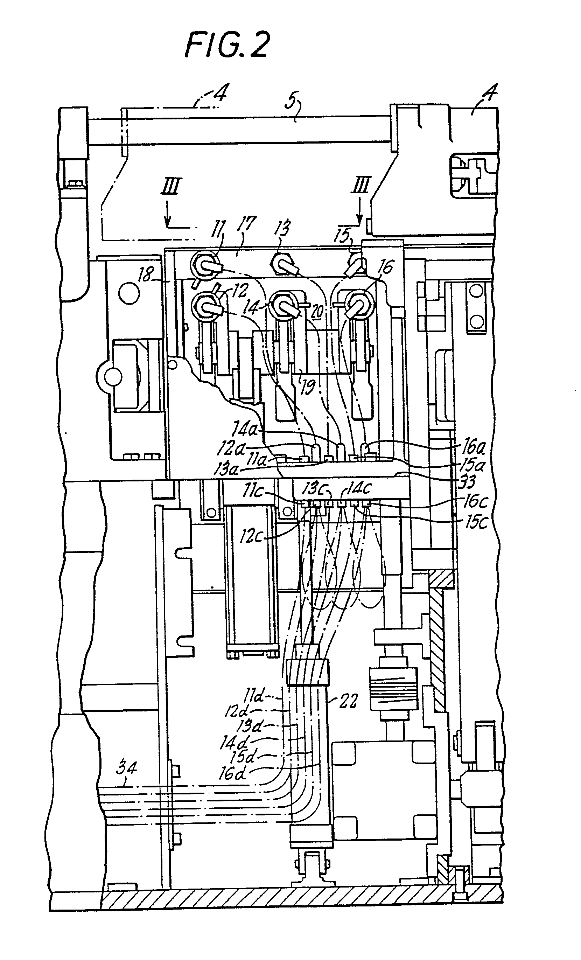

Figure 2 shows, on an enlarged scale and with parts cut away, a side view of the intermediate second station B of the machine. On one side of the machine at the station B, six optical viewing heads are arranged in an upper series of three heads 11, 13, 15 and a lower series of three heads 12, 14, 16, as shown in Figure 2. Each optical head of the upper series is arranged vertically above a corresponding head of the lower series to provide three pairs of heads 11, 12; 13, 14; 15, 16 horizontally spaced at the intermediate station B. The vertical centre lines of the three pairs of optical heads are aligned with the centres of the three parisons when the parisons are supported at the intermediate station B.

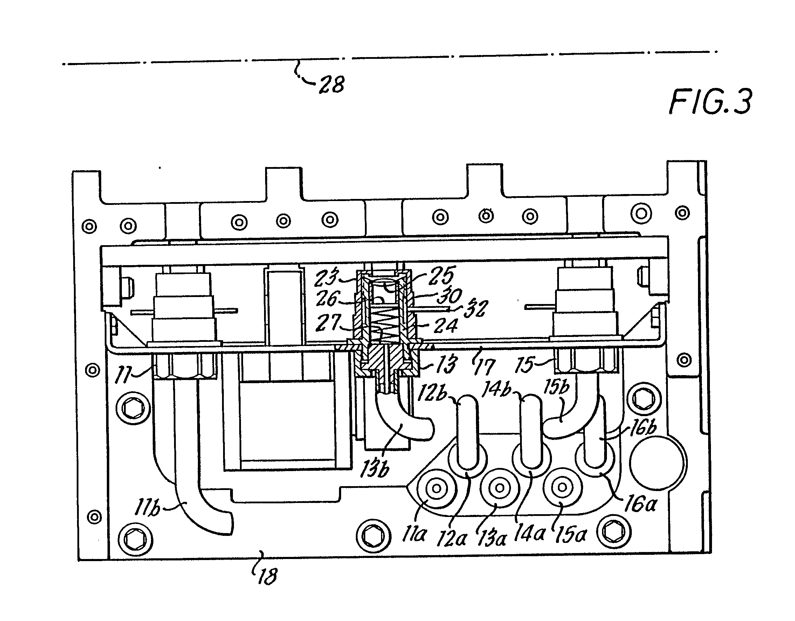

The three optical heads 11, 13, 15 forming the upper series are attached to a bracket 17 (visible also in Figure 3) which is rigidly attached to a sub-assembly frame 18 bolted to the main frame of the machine. The three optical heads 12, 14, 16 of the lower series are attached to a common bracket 19 secured to an assembly 20 which is capable of being adjusted in a vertical direction by means of a piston and cylinder device 22, the assembly 20 being guided for vertical movement in the sub-assembly frame 18 for this purpose. The assembly 20 carrying the lower series of optical heads 12, 14, 16 is shown in its uppermost position in Figure 2. The vertical position of the assembly 20 is adjusted by the piston and cylinder device 22 so that the lower series of optical heads 12, 14, 16 are on a level just below the lowest level to which acceptable parisons should stretch during reheating at the intermediate station B before transfer to the shaping station C. Hence, the vertical adjustability of the lower series of optical heads 12, 14, 16 enables these heads to be set at a position appropriate to a length of parison desired for the particular article of glassware to be formed.

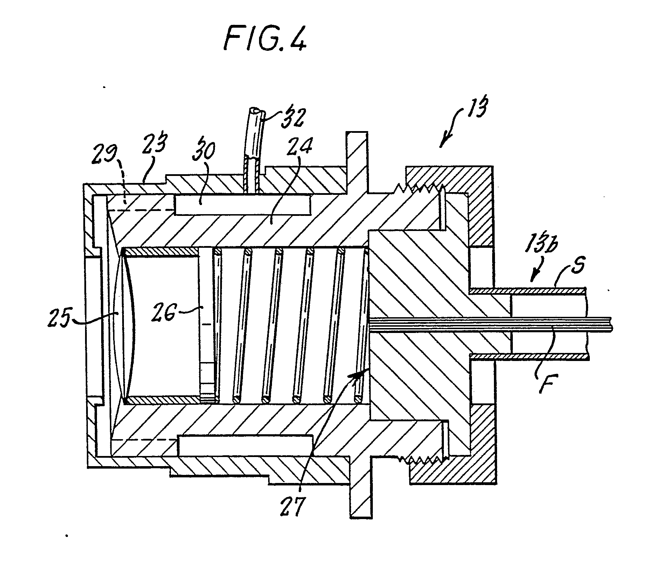

Each optical head 11 to 16 is designed to pass radiation within the infra-red part of the spectrum. Referring to Figure 3, in which the optical head 13 is shown sectioned by way of example, and to Figure 4, which is an enlarged view of the optical head 13 sectioned along a diameter thereof, each head comprises an outer housing 23 surrounding a tubular insert 24 carrying an optical lens 25 and a filter 26. The filter 26 excludes all radiation other than infra-red radiation and the lens 25 acts to focus on an image plane 27 an image of an object on the object plane 28 which coincides with a central longitudinal axis of the machine. The portion of the insert 24 surrounding the lens 25 and the filter 26 is of hexagonal shape, whilst the surrounding housing 23 is cylindrical. This provides a number of segment-like spaces 29 providing communication between an annular recess 30 formed in the outer periphery of the insert 24 and the space in front of the lens 25. A pipe 32 extends through the housing 23 and communicates with the annular recess 30. Air is fed through the pipes 32, enters the annuar recess 30, passes through the spaces 29 and across the face of the optical head in order to provide a protective air curtain over the face of the lens 25 and keep the face of the lens 25 clean. Thus, the pipe 32 provides air flow means to cause a cleansing air flow across the viewing face of the optical head.

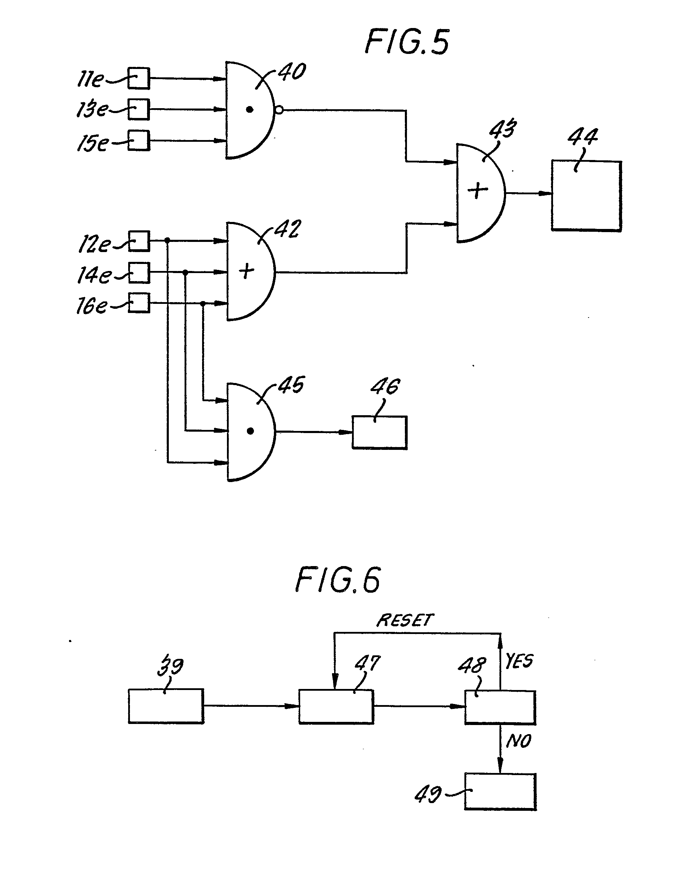

On the image plane 27 of each optical head 11 to 16, there is positioned the end of a fibre optic light guide (denoted by F in Figure 4) which is enclosed in a flexible sheathing (denoted by S in Figure 4) which extends from the optical head to a corresponding one of six light guide terminations 11a to 16a on the sub-assembly frame 18. Figure 3 shows the light guides 11b, 13b, 15b leading from the respective optical heads 11, 13, 15, it being understood that these light guides terminate at the respective terminations 11a, 13a, 15a. Figure 3 also shows the three light guides 12b, 14b, 16b which interconnect the respective optical heads 12, 14, 16 and the terminations 12a, 14a, 16a. Each of the six light guide terminations 11a to 16a on the sub-assembly frame 18 is aligned with a corresponding light guide termination 11c to 16c (Figure 2) on the main frame, the interface on which the light guide terminations abut being indicated at 33 in Figure 2. From the six light guide terminations 11c to 16c on the main frame, six further fibre optic light guides 11d to 16d extend in a group 34 in the manner shown in Figure 2 to a respective set of infra-red sensitive switches arranged in a terminal housing 35 (Figure 1) at the blank side of the machine. The six infra-red sensitive switches do not appear in the structural drawings of Figures 1 to 3, but they are shown in the logic diagram of Figure 5 at 11e to 16e. The switches 11e to 16e are commercially available bistable transistorised logic units which change state on receipt of radiation from the corresponding light guide 11d to 16d.

Since the bracket 19 carrying the three optical heads 12, 14, 16 is vertically adjustable, the fibre optic light guides 12b, 14b, 16b have sufficient length (indicated by the downwardly depending loops visible in Figure 2 below the interface 33) to accommodate the range of vertical movement of the bracket 19. Where the light guide terminations 11a to 16a on the sub-assembly frame 18 meet the light guide terminations 11c to 16c on the main frame, the ends of the light guides are simply butted together, this providing sufficient transmission of infra-red radiation across the interface 33.

Each assembly of optical viewing heads 11 to 16, light guide terminations 11a to 16a, light guides 11b to 16b, light guide terminations 11c to 16c, light guides 11d to 16d, and infra-red sensitive switches 11e to 16e forms infra-red detector means operable to provide a signal corresponding either to the presence or the absence of hot glass at the selected position in the machine at which the object plane of the optical viewing head 11 to 16 is positioned. The three optical heads 11, 13, 15 of the upper series are positioned to receive and pass infra-red radiation from the three parisons when these are supported at the intermediate station B. Hence, these optical heads have their position selected so that parisons removed from the blank station A should be detected by them. Therefore, correct delivery of the three parisons to the intermediate station B at the correct time in the machine cycle can be sensed by the three infra-red sensitive switches 11e, 13e, 15e which change their state when the parisons are detected. The three optical heads 12, 14, 16 of the lower series are used to detect whether a parison formed at the blank station A of the machine has a length exceeding a predetermined length, this length being determined by the height setting of the optical heads 12, 14, 16. These heads receive and pass infra-red radiation from a parison only if the parison exceeds the predetermined length at which the heads have been set (e.g. the parison has stretched too far), or if hot glass passes the field of view of the optical heads 12, 14, 16 as a result of a parison being dropped, either accidently or intentionally, as cullet at the intermediate station B. Hence, during normal operation of the machine the three infra-red sensitive switches 12e, 14e, 16e associated with the optical heads 12, 14, 16 should remain untriggered.

A further optical head 36 (Figure 1) is arranged on a stationary part of a piston and cylinder device 37 which operates the take-out means 7, this further optical head 36 being angled downwardly so that its field of view is crossed by articles of glassware as they are transferred by the take-out means 7 from the blow mould at the station C to the dead plate 6. The further optical head 36 is identical in construction to the six optical heads 11 to 16 previously described but has an angle of view which is laterally restricted in order to prevent the optical head 36 receiving infra-red radiation emitted by glassware at adjacent machines. A fibre optic light guide 38 extends from the optical head 36 to a corresponding infra-red sensitive electrical switch 39 (Figures 1 and 6), the signal from which is taken by a cable 39a to the terminal housing 35. During correct operation of the machine, the optical head 36 should detect the passage of three articles of glassware through the field of view of the optical head 36, and the associated switch 39 should therefore be triggered three times during the appropriate period of the machine cycle. The optical head 36 is therefore infra-red detecting means having a selected position in the machine such that articles of glassware removed from the shaping station C by take-out means of the machine should be detected by the infra-red detector means.

The conditions of the seven infra-red sensitive switches 11e to 16e and 39 are monitored in each cycle by a computer which controls the machine. The computer forms examining means operable to examine the signal provided by the infra-red detector means 11 to 16 and 36 at a selected time in the operation of the machine to ascertain whether the signal corresponds to the expected condition of the infra-red detector means. In the event that the computer detects that the signal of the infra-red detector means 11 to 16 and 36 does not correspond to the expected conditions thereof, the computer initiates emergency action. For convenience, the monitoring carried out by the computer is organised into four checks which are called "parison check 1", "parison check 2", "parison length check", and "bottle check". Parison check 1 is undertaken shortly after the neck ring mould parts of the transfer and invert mechanism 1 open, i.e. shortly after the parisons have been transferred to the support jaws of the transfer carriage 4. Parison check 1 comprises checking that all three infra-red sensitive switches 11e, 13e, 15e have been activated. If this condition is satisfied, the machine cycle continues but, if it is not satisfied, emergency action is taken and the operator is warned. Emergency action could take the form of stopping the blank side of the machine, i.e. stopping of further delivery of gobs to the blank station A but keeping the blow side of the machine operating, i.e. keeping the transfer carriage 4 moving in its normal reciprocating motion and keeping the functions of the blow station C operating, with the possible exception of cooling the blow mould since this will no longer be receiving heat from the continued receipt of parisons. The continued operation of the blow side of the machine enables the blow moulds to be cleared of articles of glassware formed from parisons received immediately before parison check 1 detected the absence of at least one parison from its intended position at station B.

Parison check 2 occurs immediately before the parisons are transferred from the intermediate station B to the shaping station C and comprises checking all three infra-red switches 11e, 13e, 15e are still activated. If this condition is not satisfied, the only emergency action required is to drop the remaining parisons and warn the operator.

Parison length check involves checking the conditions of the three switches 12e, 14e, 16e. If none of these switches has been activated, the machine cycle continues. If any one or more of the switches 12e, 14e, 16e have been activated, emergency action is taken and the operator warned. The emergency action could involve stopping the blank side of the machine entirely or allowing parison formation at station A followed by transfer of these parisons to station B to continue but then dropping these parisons as cullet at station B.

The parison length check is carried out immediately before the transfer carriage 4 moves from the intermediate station B to the blow station C. When the emergency action results in the machine forming parisons at station A and then dropping these parisons at station B, the computer checks that all three switches 12e, 14e, 16e have been activated. This acts as confirmation that the three switches and their associated electronics are in good working order.

Figure 5 illustrates parison check 1, parison check 2 and parison length check in logic diagram form. In parison checks 1 and 2, the conditions of the switches 11e, 13e, 15e are sensed or examined by a NAND gate 40 which produces an output if any one or more of the switches 11e, 13e, 15e has not been activated. In parison length check, the conditions of the switches 12e, are examined by an OR gate 42 which produces an output if any one or more of the switches 12e, 14e, 16e has been activated. The output from the two gates 40 and 42 are fed to an OR gate 43 which, if there is an output from either gate 40 or 42, itself provides an output to initiate emergency action by an emergency action device 44.

The switches 12e, 14e, 16e are also connected to an AND Gate 45 to provide a "sensors OK" signal to a block 46 when parisons are dropped at the intermediate station B.

The NAND gate 40 effectively examines the actual status of the infra-red switches 11e, 13e, 15e and compares their actual status with their expected status. The NAND gate 40 initiates emergency action when the comparison shows that the actual condition of those three switches does not correspond with their expected condition. Similarly, the OR gate 42 effectively compares the actual condition of the infra-red sensitive switches 12e, 14e, 16e with their expected condition and initiates emergency action when the comparison shows that their actual condition does not correspond with their expected condition.

The logic functions of Figure 5 may be carried out by the computer which can also include the emergency action device 44 and respond to the presence or absence of the "sensors OK" signal at block 46.

The optical head 36 is used for the bottle check, the logic circuit diagram of which is shown in Figure 6. The infra-red sensitive switch 39 produces an output in the form of an electrical signal each time that an article of glassware passes through the field of view of the optical head 36, and each electrical signal steps a counter 47. A comparator 48 compares the count in the counter 45 with a predetermined count (in this case 3) corresponding to the number of articles of glassware which should pass through the field of view of the optical head 39 in each machine cycle. This indicates that three articles of glassware have correctly been transferred past the optical head 36, and the comparator 48 takes no action to interrupt the machine cycle but resets the counter 47 to zero ready for the next counting operation. If a count other than three reaches the comparator 48 from the counter 47, the comparator 48 initiates emergency action by an emergency action device 49. This emergency action will involve stopping the shaping of further articles of glassware at the shaping station and giving a warning indication to the operator. However, the emergency action need not prevent the formation of further parisons at the station A and their transfer to the station B, although it will result in the parisons received by the support jaws of the transfer carriage 4 being released by those support jaws at the intermediate station B as cullet.

The logic functions of Figure 6 may be carried out by the computer controlling the machine.

If checks similar to any of the four checks herein described are employed on a conventional two-station individual section glassware forming machine, the emergency action in each case involves an immediate emergency stop of the machine with a simultaneous warning indication to the operator.

**Claims**

1. A method of monitoring a cyclic process of forming glassware in an individual section glassware forming machine in which gobs of molten glass are first formed into parisons at a blank station (A) of the machine and articles of glassware are shaped from the parisons at a shaping station (C) of the machine, characterised in that infra-red detector means (11, 12, 13, 14, 15, 16, 36) is used to provide a signal corresponding either to the presence or absence of hot glass at a selected position or positions in the machine, the signal provided by the infra-red detector means (11, 12, 13, 14, 15, 16, 36) is examined at a selected time in the cyclic process to ascertain whether the signal corresponds to the expected condition of the infra-red detector means (11, 12, 13, 14, 15, 16, 36) at the slected time, and emergency action is initiated in the event that the signal provided by the infra-red detector means (11, 12, 13, 14, 15, 16, 36) does not correspond to the expected condition thereof.

2. A method according to claim 1, characterised in that a selected position in the machine is such that parisons removed from the blank station (A) should be detected by the infra-red detector means (11, 13, 15) at the selected time.

3. A method according to either one of claims 1 and 2, characterised in that the infra-red detector means (12, 14, 16) is used to detect whether a parison formed at the blank station (A) of the machine has a length exceeding a predetermined length, at the selected time, and emergency action is initiated in the event that the parison exceeds that length.

4. A method according to claim 3, characterised in that the emergency action comprises dropping the parison out of the machine.

5. A method according to any one of claims 1 to 4, characterised in that a selected position in the machine is such that articles of glassware removed from the shaping station (C) by take-out means (7) of the machine should be detected by the infra-red detector means (36) at the selected time.

6. A method according to claim 5 characterised in that the cyclic process is for making a plurality of articles of glassware simultaneously with a plurality of gobs being formed into parisons at the blank station (A) and the parisons being shaped into articles of glassware at the shaping station (C), and the selected position of the infra-red detector means (36) is such that the articles of glassware will pass the selected position successively, and the signal from the detector means (36) is examined as aforesaid at successive selected times in the cyclic process, the successive selected times corresponding to the times when successive articles of glassware should pass the selected position.

7. An individual section glassware forming machine which comprises a station (A) at which a blank mould for forming a parison is located, and another station (C) at which a blow mould for shaping parisons into articles of glassware is located, characterised in that the machine also comprises monitoring apparatus comprising infra-red detector means (11, 12, 13, 14, 15, 16, 36) operable to provide a signal corresponding either to the presence or absence of hot glass at a selected position in the machine, examining means operable to examine the signal provided by the infra-red detector means (11, 12, 13, 14, 15, 16, 36) at a selected time in the operation of the machine to ascertain whether the signal corresponds to the expected condition of the infra-red detector means (11, 12, 13, 14, 15, 16, 36), and emergency action means (44, 49) operable to initiate emergency action in the machine in the event that the examining means detects that the signal of the infra-red detector means (11, 12, 13, 14, 15, 16, 36) does not correspond to the expected condition thereof.

8. An individual section glassware forming machine according to claim 7, characterised in that the infra-red detecting means (11, 12, 13, 14, 15, 16, 36) comprises transmitting means (11b, 12b, 13b, 14b, 15b, 16b) arranged to transmit infra-red radiation emitted by hot glass at the selected position in the machine to infra-red activated switch means (11e, 12e, 13e, 14e, 15e, 16e) of the detecting means located in a position in which it does not receive radiation directly from hot glass in the machine.

9. An individual section glassware forming machine according to either one of claims 7 and 8, characterised in that the selected position of the infra-red detector means (11, 12, 13, 14, 15, 16, 36) is such that the machine can carry out a method of monitoring according to any one of claims 2, 3, 4, 5, and 6.

10. An individual section glassware forming machine according to any one of claims 7 to 9, characterised in that air flow means (32) is provided to cause a cleansing air flow across a viewing face of the infra-red detecting means (11, 12, 13, 14, 15, 16, 36).

**Patentansprüche**

1. Verfahren zum Observieren eines Glasverar-beitungszyklus in einer Glasverarbeitungsmaschi-ne, in welchem Massen aus geschmolzenem Glas zunächst in Külbel an einer Rohlingsstation (A) der Maschine gebildet werden und aus den Külbeln an einer Formstation (C) der Maschine Glas-gegenstände geformt werden, dadurch gekenn-zeichnet, daß eine Infrarotdetektoreinrichtung (11, 12, 13, 14, 15, 16, 36) zum Schaffen eines Signals verwendet wird, welches entweder der Gegenwart oder der Abwesenheit von heißem Glas an einer ausgewählten Lage oder Lagen in der Maschine entspricht, daß das von der Infrarotdetektoreinrichtung (11, 12, 13, 14, 15, 16, 36) geschaffene Signal zu einer gewählten Zeit in dem zyklischen Verfahren geprüft wird, um festzustellen, ob das Signal dem erwarteten Zustand der Infrarotdetektoreinrichtung (11, 12, 13, 14, 15, 16, 36) zu der gewählten Zeit entspricht, und daß eine Notfallaktion in dem Fall eingeleitet wird, daß das von der Infrarotdetektoreinrichtung (11, 12, 13, 14, 15, 16, 36) geschaffene Signal nicht ihrem erwarteten Zustand entspricht.

2. Verfahren nach Anspruch 1, dadurch gekennzeichnet, daß eine ausgewählte Position in der Maschine der Art ist, daß von der Rohlingstation (A) entfernte Külbel von der Infrarotdetektoreinrichtung (11, 13, 15) zu der gewählten Zeit erfaßt werden.

3. Verfahren nach einem der Ansprüche 1 und 2, dadurch gekennzeichnet, daß die Infrarotdetektoreinrichtung (12, 14, 16) verwendet wird, um anzuzeigen, ob ein an der Rohlingstation (A) der Maschine geformter Külbel eine Länge aufweist, die zu der gewählten Zeit eine vorbestimmte Länge überschreitet, und daß in dem Fall eine Notfallaktion eingeleitet wird, daß der Külbel diese Länge überschreitet.

4. Verfahren nach Anspruch 3, dadurch gekennzeichnet, daß die Notfallaktion das Herausfallen des Külbels aus der Maschine umfaßt.

5. Verfahren nach einem der Ansprüche 1 bis 4, dadurch gekennzeichnet, daß eine gewählte Position in der Maschine der Art ist, daß Glasgegenstände, die von der Formstation (C) mittels einer Abnahmeeinrichtung (7) der Maschine entfernt werden, von der Infrarotdetektoreinrichtung (36) zu der gewählten Zeit erfaßt werden.

6. Verfahren nach Anspruch 5, dadurch gekennzeichnet, daß das zyklische Verfahren dem gleichzeitigen Herstellen einer Vielzahl von Glasgegenständen dient, wobei eine Vielzahl von Massen in Külbel in der Rohlingstation (A) geformt werden und die Külbel in Glasgegenstände in der Formstation (C) geformt werden, daß die ausgewählte Position der Infrarotdetektoreinrichtung (36) der Art ist, daß die Glasgegenstände die ausgewählte Position nacheinander passieren, und daß das Signal aus der Detektoreinrichtung (36) zu aufeinanderfolgenden gewählten Zeiten in dem zyklischen Verfahren geprüft wird, und daß die aufeinanderfolgenden gewählten Zeiten den Zeiten entsprechen, in denen aufeinanderfolgende Glasgegenstände die ausgewählte Position passieren sollten.

7. Maschine zum Herstellen von Glasgegenständen, mit einer Station (A), in welcher eine Rohlingform zum Formen eines Külbels vorgesehen ist, und mit einer anderen Station (C), in welcher eine Blasform zum Formen von Külbeln in Glasgegenstände angeordnet ist, dadurch gekennzeichnet, daß eine Überwachungsvorrichtung vorgesehen ist, welche eine Infrarotdetektoreinrichtung (11, 12, 13, 14, 15, 16, 36) umfaßt, die im Betrieb ein Signal schafft, das entweder der Gegenwart oder der Abwesenheit von heißem Glas in einer gewählten Position in der Maschine entspricht, daß eine Prüfeinrichtung zum Prüfen des Signales, welches von der Infrarotdetektoreinrichtung (11, 12, 13, 14, 15, 16, 36) geschaffen ist, zu einer gewählten Zeit im Betrieb der Maschine, feststellt, ob das Signal dem erwarteten Zustand der Infrarotdetektoreinrichtung (11, 12, 13, 14, 15, 16, 36) entspricht, und daß eine Notfallwirkeinrichtung (44, 49) betätigbar ist, um eine Notaktion in der Maschine einzuleiten, falls die Prüfeinrichtung angibt, daß das Signal der Infrarotdetektoreinrichtung (11, 12, 13, 14, 15, 16, 36) nicht dem erwarteten Zustand entspricht.

8. Maschine nach Anspruch 7, dadurch gekennzeichnet, daß die Infrarotdetektoreinrichtung (11, 12, 13, 14, 15, 16, 36) eine Übertragungseinrichtung (11b, 12b, 13b, 14b, 15b, 16b) umfaßt, welche Infrarotstrahlung, emittiert vom heißen Glas an der ausgewählten Position in der Maschine, zu einer durch Infrarot aktivierten Schaltereinrichtung (11e, 12e, 13e, 14e, 15e, 16e) der Detektoreinrichtung übermittelt, welche in einer Lage angeordnet ist, in welcher sie keine Strahlung direkt vom heißen Glas in der Maschine empfängt.

9. Maschine nach einem der Ansprüche 7 und 8, dadurch gekennzeichnet, daß die gewählte Position der Infrarotdetektoreinrichtung (11, 12, 13, 14, 15, 16, 16, 36) der Art ist, daß die Maschine ein Verfahren zum Überwachen bzw. Observieren gemäß einem der Ansprüche 2, 3, 4, 5 und 6 ausführen kann.

10. Maschine nach einem der Ansprüche 7 bis 9, dadurch gekennzeichnet, daß eine Luftströmungseinrichtung (32) vorgesehen ist, um einen Reinigungsluftstrom über eine Sichtfläche der Infrarotdetektoreinrichtung (11, 12, 13, 14, 15, 16, 36) zu schaffen.

**Revendications**

1. Procédé d'observation d'un processus cyclique de formage d'articles en verre dans une machine de fabrication d'articles en verre à sections individuelles dans laquelle des masses de verre fondu sont d'abord formées en des paraisons à un poste d'ébauchage (A) de la machine et des articles de verre sont mis en forme à partir des paraisons à un poste de formage (C) de la machine, caractérisé en ce qu'un dispositif détecteur d'infrarouges (11, 12, 13, 14, 15, 16, 36) est utilisé pour produire un signal correspondant à la présence ou à l'absence de verre chaud dans une ou plusieurs positions sélectionnées dans la machine, le signal produit par le dispositif détecteur d'infrarouges (11, 12, 13, 14, 15, 16, 36) étant examiné à un instant sélectionné dans le processus cyclique pour déterminer si le signal correspond à l'état attendu du dispositif détecteur d'infrarouges (11, 12, 13, 14, 15, 16, 36) à l'instant sélectionné et une action d'urgence étant déclenchée dans le cas où le signal produit par le dispositif détecteur d'infrarouges (11, 12, 13, 14, 15, 16, 36) ne correspond pas à son état attendu.

2. Procédé selon la revendication 1, caractérisé en ce qu'une position sélectionnée dans la machine est telle que des paraisons enlevées du poste d'ébauchage (A) doivent être détectées par le dispositif détecteur d'infrarouges (11, 13, 15) à l'instant sélectionné.

3. Procédé selon l'une quelconque des revendications 1 et 2, caractérisé en ce que le dispositif détecteur d'infrarouges (12, 14, 16) est utilisé pour détecter si une paraison formée au poste d'ébauchage (a) de la machine a une longueur dépassant une longueur prédéterminée à l'instant sélectionné, une action d'urgence étant déclenchée dans le cas où la paraison dépasse cette longueur.

4. Procédé selon la revendication 3, caractérisé en ce que l'action d'urgence consiste à éliminer la paraison hors de la machine.

5. Procédé selon l'une quelconque des revendications 1 à 4, caractérisé en ce qu'une position sélectionnée dans la machine est telle que des articles de verre enlevés du poste de formage (C) par un dispositif de prélèvement (7) de la machine doivent être détectés par le dispositif détecteur d'infrarouges (36) à l'instant sélectionné.

6. Procédé selon la revendication 5, caractérisé en ce que le processus cycliques consiste à fabriquer plusieurs articles de verre simultanément avec plusieurs masses de verre formées en paraisons au poste d'ébauchage (A) et des paraisons étant mises en forme en des articles de verre au poste de formage (C), et la position sélectionnée du dispositif d'infrarouges (36) étant telle que les articles de verre passent successivement par la position sélectionnée, et le signal provenant du dispositif détecteur (36) étant examiné de la manière précitée à des instants sélectionnés successifs dans le processus cyclique, les instants sélectionnés successifs correspondant aux instants où des articles successifs de verre passent par leur position sélectionnée.

7. Machine de fabrication d'articles en verre à sections individuelles, comportant un poste (A) auquel est disposé un moule à ébauche pour former une paraison et un autre poste (C) auquel est situé un moule à soufflage pour former des paraisons en des articles de verre, caractérisée en ce que la machine comporte également un appareil d'observation comprenant un dispositif détecteur d'infrarouges (11, 12, 13, 14, 15, 16, 36) ayant pour fonction de produire un signal correspondant à la présence ou à l'absence de verre chaud dans une position sélectionnée dans la machine, un dispositif d'examen ayant pour fonction d'examiner le signal produit par le dispositif détecteur d'infrarouges (11, 12, 13, 14, 15, 16, 36) à un instant sélectionné dans le fonctionnement de la machine pour déterminer si le signal correspond à l'état attendu du dispositif détecteur d'infrarouges (11, 12, 13, 14, 15, 16, 36) et un dispositif d'action d'urgence (44, 49) ayant pour fonction de déclencher une action d'urgence dans la machine dans le cas où le dispositif d'examen détecte que le signal du dispositif détecteur d'infrarouges (11, 12, 13, 14, 15, 16, 36) ne correspond pas à son état attendu.

8. Machine de fabrication d'articles en verre à sections individuelles selon la revendication 7, caractérisée en ce que le dispositif de détection d'infrarouges (11, 12, 13, 14, 15, 16, 36) comporte un dispositif de transmission (11b, 12b, 13b, 14b, 15b, 16b) agencé pour transmettre un rayonnement infrarouge émis par du verre chaud dans la position sélectionnée de la machine vers un dispositif commutateur actionné par infrarouges (11e, 12e, 13e, 14e, 15e, 16e) du dispositif de détection, disposé dans une position dans laquelle il ne reçoit pas directement un rayonnement provenant du verre chaud dans la machine.

9. Machine de fabrication d'articles en verre à sections individuelles selon l'une ou l'autre des revendications 7 et 8, caractérisée en ce que la position sélectionnée du dispositif détecteur d'infrarouges (11, 12, 13, 14, 15, 16, 36) est telle que la machine permet la mise en oeuvre d'un procédé d'observation selon l'une quelconque des revendications 2, 3, 4, 5 et 6.

10. Machine de fabrication d'articles en verre à sections individuelles selon l'une quelconque des revendications 7 à 9, caractérisée en ce qu'un dispositif de circulation d'air (32) est prévu pour que de l'air de nettoyage circule le long d'une face d'observation du dispositif de détection d'infrarouges (11, 12, 13, 14, 15, 16, 36).

FIG.1

# FIG.2

FIG.3

# FIG.4

## FIG.5

## FIG.6